# EUROPÄISCHE PATENTANMELDUNG

(11) **EP 4 575 244 A1**
(43) Veröffentlichungstag der Anmeldung: **25.06.2025**
(21) Anmeldenummer: 24220411.3
(22) Anmeldetag: 17.12.2024
(51) Int. Cl.: F16B 37/04, F16B 37/06, B65F 9/00, B65F 3/02

(54) **FIXIERUNGSSYSTEM**

(30) Priorität: 21.12.2023 DE 102023136258
(71) Anmelder: Zoeller Tech Sp. z.o.o., 84-123 Rekowo Górne (PL)
(72) Erfinder: Kreft, Grzegorz, 84-230 Rumia (PL); Kubiak, Maciej, 84-240 Reda (PL)
(74) Vertreter: Regler, Markus Egid

(57) **Zusammenfassung**

Die Erfindung betrifft ein Fixierungssystem für ein Abfallsammelfahrzeug umfassend zumindest ein Profil (2) und zumindest ein Adapterstück (3), das an oder in dem Profil (2) anordnenbar ist, wobei Profil (2) und Adapterstück (3) dazu eingerichtet sind, um an einem Aufbau (1) eines Abfallsammelfahrzeugs angeordnet zu werden und die Anbringung eines Anbauteils an dem Aufbau (1) zu ermöglichen,
wobei das Profil (2) so ausgebildet ist, dass unterschiedliche auf konkrete Anbauteile abgestimmte Adapterstücke (3) an unterschiedlichen Positionen anordnenbar sind, so dass die Adapterstücke (3) Anbindungspunkte (8) für das Anbauteil bilden.

Außerdem betrifft die Erfindung ein Abfallsammelfahrzeug mit einem solchen Fixierungssystem.

Mit Hilfe der Erfindung wird die Montage unterschiedlicher Anbauteile an identisch ausgestalteten Aufbauten (1) auf einfache Weise ermöglicht. Gleichzeitig wird auch der Aufwand für die Lagerung und Logistik reduziert. Außerdem wird eine Umrüstbarkeit eines Abfallsammelfahrzeugs ermöglicht, indem lediglich die Adapterstücke (3) ausgetauscht werden müssen.

## Beschreibung

Die Erfindung betrifft ein Fixierungssystem mit den Merkmalen von Patentanspruch 1 sowie ein Abfallsammelfahrzeug mit einem derartigen Fixierungssystem.

Abfallsammelfahrzeuge umfassen in der Regel verschiedene Baugruppen, die je nach Bedarf und Ausführung unterschiedlich zusammengestellt werden. Das ist zum einen das Chassis oder der Unterbau, der die Motorisierung und das Fahrerhaus umfasst. Auf dem Chassis wird ein Aufbau angeordnet, der einen Sammelcontainer umfasst, dessen Volumen von den jeweiligen Einsatzanforderungen abhängt. Davon abhängig ist auch die Hub-Kipp- oder Kippvorrichtung, die front- oder heckseitig oder auch seitlich angeordnet wird.

Die endgültige Zusammenstellung hängt also von den jeweiligen Bedarfen ab, so dass bei der Herstellung von Abfallsammelfahrzeugen unterschiedliche Aufbauten mit unterschiedlichen Anbauteilen, also Hub-Kipp- oder Kippvorrichtungen oder Hecktüren, kombiniert werden. Die unterschiedlichen Anbauteile werden auf unterschiedliche Weise an den Aufbauten befestigt, was es erforderlich macht, die Anbindungen individuell herzustellen. Das führt zu erhöhtem Aufwand hinsichtlich Fertigung und Lagerung.

Es ist daher die Aufgabe der vorliegenden Erfindung den Herstellungsprozess diesbezüglich zu verbessern.

Die Aufgabe wird gelöst durch ein Fixierungssystem mit den Merkmalen von Patentanspruch 1 sowie ein Abfallsammelfahrzeug mit den Merkmalen von Patentanspruch 14. Vorteilhafte Ausgestaltungen der Erfindung sind Gegenstand der jeweils abhängigen Ansprüche.

Die Erfindung betrifft ein Fixierungssystem für ein Abfallsammelfahrzeug umfassend zumindest ein Profil und zumindest ein Adapterstück, das an oder in dem Profil anordnenbar ist, wobei Profil und Adapterstück dazu eingerichtet sind, um an einem Aufbau eines Abfallsammelfahrzeugs angeordnet zu werden und die Anbringung eines Anbauteils an dem Aufbau zu ermöglichen, wobei das Profil so ausgebildet ist, dass unterschiedliche auf konkrete Anbauteile abgestimmte Adapterstücke an unterschiedlichen Positionen anordnenbar sind, so dass die Adapterstücke Anbindungspunkte für das Anbauteil bilden.

Die Profile sind für unterschiedliche Typen von Anbauteilen universell einsetzbar. Das bedeutet, dass lediglich nur eine Sorte von Profilen gefertigt und auf Lager gehalten werden muss. Das ermöglicht Einsparung von finanziellen Aufwendungen und Lagerplatz. Zudem wird die Montage erleichtert, da nur noch eine Art von Profil am Aufbau angebracht werden muss.

Für jedes Anbauteil sind jeweils passend angefertigte Adapterstücke vorgesehen, die an oder in dem Profil angebracht werden. Das Profil sieht entsprechende Verbindungsmöglichkeiten für die unterschiedlichen Adapterstücke vor. Das bedeutet, dass am fertig montierten Profil lediglich die passenden Adapterstücke an den für das jeweilige Anbauteil vorgesehenen Positionen angebracht werden müssen. Die Adapterstücke sind so ausgestaltet, dass sie sowohl an oder in dem Profil befestigt werden können als auch Anbindungsmöglichkeiten für das jeweilige Anbauteil vorsehen, mithin Anbindungspunkte für diese bilden. Neben der vereinfachten Montage hat das den zusätzlichen Vorteil, dass bei geänderten Einsatzbedürfnissen auch der Wechsel von einem Anbauteil zu einem anderen Anbauteil sehr einfach möglich ist. Es sind lediglich die Adapterstücke auszutauschen, so dass ein Aufbau eines Abfallsammelfahrzeuges problemlos mit verschiedenen Anbauteilen kombiniert und entsprechend umgerüstet werden kann.

Profil und Adapterstücke werden bevorzugt aus einem metallischen Material, beispielsweise Stahl oder Aluminium gefertigt.

Vorzugsweise ist das Profil ein zumindest abschnittsweise geschlossenes Profil. Das Profil ist dadurch sehr stabil bei minimiertem Gewicht. Besonders bevorzugt weist das Profil einen im Wesentlichen rechteckigen Querschnitt auf. In Abschnitten, wo das Profil nicht geschlossen ist, weist es vorzugsweise einen C-förmigen Querschnitt auf.

In einer bevorzugten Ausgestaltung der Erfindung weist das Profil eine erste Wand auf, die mit dem Aufbau eines Abfallsammelfahrzeugs in Anlage bringbar ist und in der erste Öffnungen zum Fixieren des Adapterstücks vorgesehen sind. Das Profil wird vorzugsweise vollflächig mit dem Aufbau in Anlage gebracht. Bevorzugt wird das Profil stoffschlüssig, besonders bevorzugt schweißtechnisch, mit dem Aufbau verbunden. Dadurch ist es möglich, dass eine stabile und dauerhaft haltbare Verbindung zwischen dem Profil und dem Aufbau entsteht. Mit Hilfe der ersten Öffnungen ist es möglich, die Adapterstücke beispielsweise schraubtechnisch mit dem Profil zu verbinden. Vorzugsweise weist der Aufbau korrespondierende Öffnungen auf, so dass das Adapterstück durch die Wand des Aufbaus hindurch mit dem Profil verschraubt werden kann.

In einer weiteren bevorzugten Ausgestaltung der Erfindung sind unterschiedliche Arten von ersten Öffnungen vorgesehen, um auf unterschiedliche Anbauteile angepasste Adapterstücke zu fixieren. Die Adapterstücke weisen je nach Anbauteil unterschiedliche Formgebung auf. Da die Anbauteile an unterschiedlichen Positionen am Aufbau des Abfallsammelfahrzeugs angebunden werden, müssen auch die entsprechenden Adapterstücke an den zugehörigen Positionen am oder im Profil angebracht werden. Dafür werden die unterschiedlichen Arten von ersten Öffnungen, also unterschiedliche Lochbilder oder Anbindungspositionen vorgesehen.

Eine weitere bevorzugte Ausgestaltung der Erfindung sieht vor, dass das Profil eine zweite Wand aufweist, die mit einem Anbauteil eines Abfallsammelfahrzeugs in Anlage bringbar ist und in der zweite Öffnungen zum Fixieren des Anbauteils vorgesehen sind. Auch hier kommt das Profil vorzugsweise vollflächig mit dem Anbauteil in Anlage und wird vorzugsweise schraubtechnisch mit diesem verbunden. Dabei erfolgt die Schraubverbindung durch die Öffnungen hindurch.

Bevorzugt ist vorgesehen, dass unterschiedliche Arten von zweiten Öffnungen vorgesehen sind, um unterschiedliche Anbauteile zu fixieren. Die Anbauteile weisen voneinander unterschiedliche Lochbilder für die Fixierung auf und werden zudem an unterschiedlichen Positionen fixiert. Durch das Vorsehen von unterschiedlichen Arten von Öffnungen für unterschiedliche Lochbilder und Anbindungspositionen können flexibel unterschiedliche Anbauteile angebracht werden.

Weiterhin bevorzugt ist vorgesehen, dass zweite Öffnungen zum Fixieren eines konkreten Anbauteils in verschiedenen Höhen vorgesehen sind. Das bedeutet, dass ein Lochbild für die Fixierung eines bestimmten Anbauteils an einer Anbindungsposition mehrfach in verschiedenen Höhen vorgesehen ist. Das bezieht sich auf die Einbaulage des Profils, das sich gewöhnlich mit seiner Längsrichtung in Fahrzeughochrichtung erstreckt. Das ermöglicht die Anbringung eines Anbauteils in verschieden Positionen in Fahrzeughochrichtung. Bei Chassis' von unterschiedlichen Herstellern ist die Auflagefläche für die Aufbauten in unterschiedlichen Höhen. Gleichzeitig ist beispielsweise die Höhe der Kippkante normiert. Durch das Vorsehen von zweiten Öffnungen für ein konkretes Anbauteil in verschiedenen Höhen können die unterschiedlichen Geometrien der Chassis' ausgeglichen werden. Auch produktionsbedingte Toleranzen können so ausgeglichen werden. Da bei dieser Ausgestaltung der Erfindung die Adapterstücke an unterschiedlichen zweiten Öffnungen angeordnet werden, müssen gleichermaßen auch in der Höhe variierende erste Öffnungen in der ersten Wand des Profils vorgesehen sein. Alternativ können auch die Adapterstücke unterschiedliche Löcher zur Anbindung des Anbauteils in verschiedenen Höhen vorsehen.

In einer weiteren bevorzugten Ausgestaltung der Erfindung weist das Profil eine dritte Wand auf, in der dritte Öffnungen zum Einbringen von Werkzeugen oder für Montagezwecke vorgesehen sind und die vorzugsweise von dem Aufbau eines Abfallsammelfahrzeugs weg weist. Die dritten Öffnungen ermöglichen die Befestigung der Adapterstücke und des Anbauteils, da dadurch die ersten und zweiten Öffnungen zugänglich sind. Außerdem können die dritten Öffnungen dafür genutzt werden, die Adapterstücke innerhalb des Profils an ihre vorgesehene Position zu führen. Insbesondere können dritte Öffnungen vorgesehen sein, um einen Lackierkopf in das Profil einzubringen und in dem Profil zu führen, um die Innenoberfläche des Profils zu lackieren.

Vorzugsweise weist das Profil einen Innenraum auf, in den das zumindest eine Adapterstück einbringbar ist. Bevorzugt wird das Adapterstück an einem Ende des hohlen Profils in dieses eingeführt und innerhalb des Profils an seine vorgesehen Position geschoben. Die dritten Öffnungen sind vorzugsweise so beabstandet, dass das Adapterstück durch diese hindurch ergriffen und weitergeschoben werden kann. Durch die Positionierung des Adapterstücks im Innenraum des Profils ist es vor Verschmutzung weitgehend geschützt, was Korrosion verhindert.

In einer bevorzugten Ausführung der Erfindung weist das Adapterstück einen ersten Flächenabschnitt auf, der mit der ersten Wand in Anlage bringbar ist, und einen zweiten Flächenabschnitt aufweist, der mit der zweiten Wand in Anlage bringbar ist. Dadurch ist das Adapterstück bevorzugt vollflächig mit den korrespondierenden Wänden in Anlage bringbar und kann stabil befestigt werden.

Besonders bevorzugt weist der erste Flächenabschnitt zumindest ein Loch auf, das in Einbaulage mit einer ersten Öffnung der ersten Wand fluchtend angeordnet ist, so dass das Adapterstück schraubtechnisch fixierbar ist. Eine Schraube wird durch die erste Öffnung der ersten Wand und das Loch des ersten Flächenabschnitts geführt und festgelegt. So wird das Adapterstück auf einfache Weise mit geringem Aufwand an seiner vorgesehenen Position montiert und kann ebenso einfach wieder entfernt werden. Vorzugsweise wird die Schraube vom Aufbau des Abfallsammelfahrzeugs her in die Löcher geführt und profilseitig festgelegt, beispielsweise durch eine Mutter.

Weiterhin bevorzugt ist vorgesehen, dass der zweite Flächenabschnitt zumindest ein Loch aufweist, das in Einbaulage mit einer zweiten Öffnung der zweiten Wand fluchtend angeordnet ist, so dass ein Anbauteil schraubtechnisch fixierbar ist. Vorzugsweise wird die Schraube von dem Anbauteil her in die Löcher geführt und profilseitig festgelegt, beispielsweise durch eine Mutter. Das entspricht der herkömmlichen Anbringung der Anbauteile, so dass diesbezüglich keine Veränderungen notwendig sind.

Besonders bevorzugt weist der zweite Flächenabschnitt ein zur Befestigungsvorrichtung eines Anbauteils passendes Lochbild auf. Auch das führt dazu, dass das Anbauteil in gewohnter Weise montiert werden kann. Das Fixierungssystem kann daher problemlos in bestehende Fertigungslinien eingeführt werden.

Weiterhin bevorzugt weist der zweite Flächenabschnitt mehrere Lochbilder auf, die zu Befestigungsvorrichtungen unterschiedlicher Anbauteile passen. Idealerweise wird ein Loch für unterschiedliche Anbauteile genutzt. Dadurch wird die Anzahl der Varianten für die Adapterstücke weiter reduziert, was Kosten und Aufwand für Lagerhaltung reduziert.

Eine besondere Ausführung der Erfindung sieht vor, dass die Löcher des Adapterstücks für die schraubtechnische Fixierung mit Muttern versehen sind. Die Muttern sind vorzugsweise stoffschlüssig mit dem Adapterstück verbunden, besonders bevorzugt schweißtechnisch mit dem Adapterstück verbunden. Die Muttern werden bei der Herstellung der Adapterstücke an diesen angebracht. Bei der Montage ist es daher sowohl beim Fixieren des Adapterstücks am oder im Profil als auch beim Anbringen des Anbauteils nicht notwendig, beim Festziehen der Schrauben die Mutter gegenzuhalten. Es ist lediglich notwendig, das Adapterstück selbst festzuhalten, was einfacher zu bewerkstelligen ist und die Montage vereinfacht.

Alternativ dazu können die Muttern auch durch ein Hilfsblech an dem Adapterstück gehalten werden. Das Hilfsblech wird form-, kraft- oder stoffschlüssig mit dem Adapterstück verbunden und bildet eine Halterung für die Muttern aus, in die diese zugeordnet zu den Löchern des Adapterstücks eingelegt werden. Besonders bevorzugt ist das Hilfsblech beziehungsweise die Halterung so ausgebildet, dass die Muttern rotatorisch festgelegt sind, so dass beim Festziehen der Schrauben die Muttern nicht gegengehalten werden müssen. Es ist lediglich notwendig, das Adapterstück selbst festzuhalten, was einfacher zu bewerkstelligen ist und die Montage vereinfacht.

Sind in dem zweiten Flächenabschnitt des Adapterstücks mehrere Lochbilder vorgesehen, die zu Befestigungsvorrichtungen unterschiedlicher Anbauteile passen, dann werden nur die jeweils notwendigen Löcher des Adapterstücks mit Muttern versehen, also stoffschlüssig dort angeordnet oder mit einem Hilfsblech gehalten. In letztem Fall können unterschiedliche, an das Lochbild für das jeweilige Anbauteil angepasste Hilfsbleche zum Einsatz kommen.

Weiterhin bevorzugt weist das Adapterstück endseitig Laschen auf. An diesen Laschen, die vorzugsweise an den in Einbaulage oberen und unteren Enden der Adapterstücke vorgesehen sind, kann das Adapterstück beim Einbringen in des Profil gegriffen werden. Die Laschen werden durch einen einfachen Biegeprozess hergestellt. Bei der Montage eines Adapterstücks, wird dieses in das Profil eingeführt und durch eine Öffnung in dem Profil an einer Lasche ergriffen und durch das Profil geschoben, bis es durch eine weitere in Längsrichtung des Profils angeordnete Öffnung erneut ergriffen werden kann. Dieses Verfahren wird durch das Vorsehen erfindungsgemäßer Laschen sehr erleichtert.

In einer besonderen Ausgestaltung der Erfindung sind die Löcher in dem ersten Flächenabschnitt und dem zweiten Flächenabschnitt des Adapterstücks so ausgebildet, dass das Adapterstück an unterschiedlichen Positionen in oder an dem Profil anbringbar ist, insbesondere dass das Adapterstück in oder an einem Profil an einer linken Seite des Aufbaus und in oder an einem Profil an einer rechten Seite des Aufbaus anbringbar ist. Ein Anbauteil wird oftmals an unterschiedlichen Anbindungspunkten mit unterschiedlichen Lochbildern angeschraubt. Alle unterschiedlichen Lochbilder können in einem Adapterstück vorgesehen sein. Will man ein Adapterstück sowohl in oder an einem Profil an einer linken Seite des Aufbaus und in oder an einem Profil an einer rechten Seite des Aufbaus anbringen, dann muss das Lochbild für einen Anbindungspunkt zweimal, jeweils um 180 Grad gedreht vorgesehen sein. Indem man alle möglichen Lochbilder für alle Anbindungspunkte eines Anbauteils in einem Adapterstück vorsieht, kann dieses als Gleichteil gefertigt werden. Dadurch werden Fertigungskosten und Lageraufwand optimiert.

Weiterhin ist bevorzugt vorgesehen, dass die Profile weitere Öffnungen, insbesondere in der ersten und/oder zweiten und/oder dritten Wand, zum Anbringen weiterer Komponenten aufweisen. Damit werden die Profile vorteilhafterweise dazu genutzt, weitere Komponenten am Aufbau des Abfallsammelfahrzeugs anzubringen. Dabei kann es sich um weitere Aufbauträger handeln, aber auch um Beleuchtungskörper, Überwachungseinrichtungen, Bedienelemente und dergleichen.

Die Erfindung betrifft weiterhin ein Abfallsammelfahrzeug mit einem vorstehend beschriebenen Fixierungssystem. Ein solches Abfallsammelfahrzeug ist vorteilhaft ausgestaltet hinsichtlich Montage, Wartung und Umrüstbarkeit. Auf Details wird zur Vermeidung von Wiederholungen auf das Vorstehende verwiesen.

Vorzugsweise ist an dem Abfallsammelfahrzeug am heckseitigen Aufbau rechtsseitig und linksseitig je ein Profil angeordnet, vorzugsweise angeschweißt. Damit werden die Anbindungspunkte für ein Anbauteil bereitgestellt, so dass eine herkömmliche Montage des Anbauteils möglich ist.

Weitere Merkmale der Erfindung ergeben sich aus den nachfolgenden Zeichnungen und der zugehörigen Beschreibung.

Es zeigen:
- Figur 1 a,b: Ein Profil in verschiedenen Perspektiven,
- Figur 2 a,b: eine erste Ausführung eines Adapterstücks,
- Figur 3: eine Aufbau eines Abfallsammelfahrzeugs mit einem ersten Anbindungsschema für ein Anbauteil,
- Figur 4: eine Detaildarstellung des ersten Anbindungsschemas,
- Figur 5 a,b: eine zweite Ausführung eines Adapterstücks,
- Figur 6: eine Aufbau eines Abfallsammelfahrzeugs mit einem zweiten Anbindungsschema für ein Anbauteil,
- Figur 7: eine Detaildarstellung des zweiten Anbindungsschemas,
- Figur 8 a,b: eine dritte Ausführung eines Adapterstücks,
- Figur 9: eine Aufbau eines Abfallsammelfahrzeugs mit einem dritten Anbindungsschema für ein Anbauteil,
- Figur 10: eine Detaildarstellung des dritten Anbindungsschemas.

Die hier vorgestellten Ausführungsbeispiele beziehen sich auf sogenannte Hecklader, also Abfallsammelfahrzeuge, die am Aufbau 1 eine heckseitige Einfüllöffnung mit entsprechenden Lifter-Systemen aufweisen. Die Erfindung ist aber nicht darauf beschränkt. Das erfindungsgemäße Fixierungssystem kann auch bei anderen Ausführungsvarianten von Abfallsammelfahrzeugen zum Einsatz kommen.

Die Erfindung zeichnet sich dadurch aus, dass unterschiedlichste Anbauteile an ein und demselben Aufbau 1 montiert werden können, ohne dafür individuelle Lochbilder zur schraubtechnischen Montage vorsehen zu müssen. Dabei kommt ein Fixierungssystem zum Einsatz, das Profile 2 und Adapterstücke 3 umfasst. Die Profile 2 sind derart ausgebildet, dass unterschiedliche auf konkrete Anbauteile abgestimmte Adapterstücke 3 an unterschiedlichen Positionen anordnenbar sind, so dass die Adapterstücke 3 Anbindungspunkte für das Anbauteil bilden. Die Profile 2 weisen also sowohl Anbindungsmöglichkeiten für unterschiedliche Arten von Adapterstücken 3 auf, ebenso sind unterschiedliche Anbindungsmöglichkeiten für unterschiedliche Anbauteile vorgesehen.

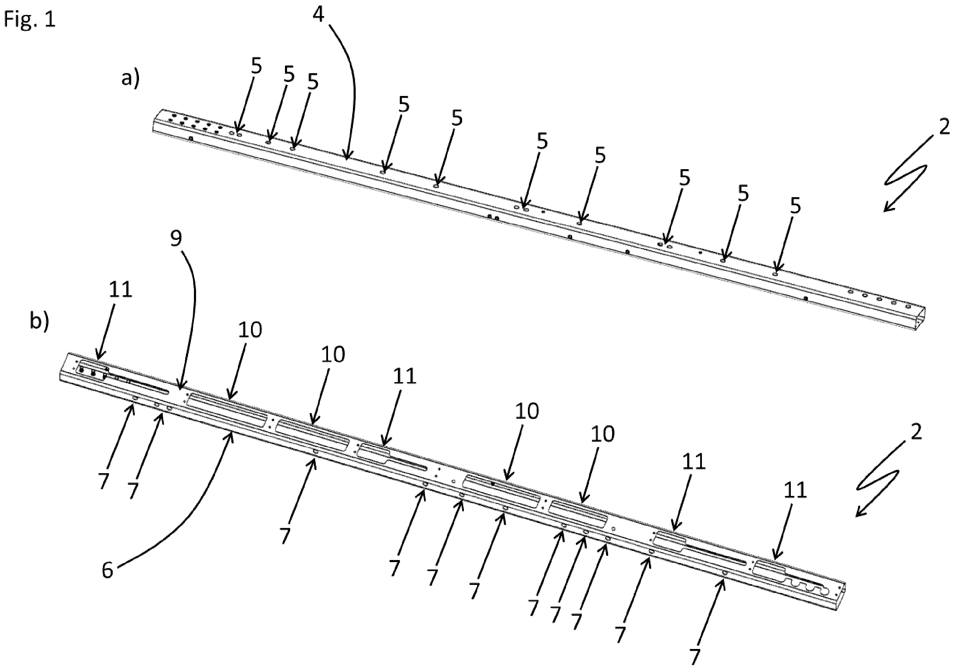

Das in Figur 1 a,b in verschiedenen Perspektiven dargestellte Profil 2 hat einen rechteckigen Querschnitt und ist abschnittsweise geschlossen.

Es weist eine erste Wand 4 auf die mit dem Aufbau 1 eines Abfallsammelfahrzeugs in Anlage bringbar ist und in der erste Öffnungen 5 zum Fixieren von Adapterstücken 3 vorgesehen sind.

Für jedes mögliche Anbauteil, die alle auf unterschiedliche Weise an dem Aufbau 1 montiert werden, ist ein Adapterstück 3 vorgesehen, das an unterschiedlichen Positionen des Profils 2 festgelegt werden kann. Dazu weist das Profil 2 in diesem Ausführungsbeispiel erste Öffnungen 4 zum Fixieren der Adapterstücke 3 auf. Die ersten Öffnungen 5 für ein bestimmtes Adapterstück 3 sind in verschiedenen Höhen des Profils 2 entsprechend den Vorgaben zur Positionierung des Adapterstücks 2 angeordnet. Dabei ist auch berücksichtigt, dass das Profil 2 im Sinne der Gleichteilfertigung an beiden Seiten des Hecks des Abfallsammelfahrzeugs angeordnet werden kann. Auch die Adapterstücke 3 sind so ausgestaltet, dass sie sowohl in einem rechten als auch in einem linken Profil 2 eines Aufbaus 1 angeordnet werden können. Dementsprechend sehen auch die Profile 2 erste Öffnungen 5 für beide Anordnungsmöglichkeiten vor.

Das Profil 2 ist in den hiesigen Ausführungsbeispielen vollflächig in Anlage mit dem Aufbau 1 und schweißtechnisch daran festgelegt. Dadurch erhält man eine stabile, dauerfeste Verbindung.

Das Profil 2 weist weiterhin eine zweite Wand 6 auf die mit einem Anbauteil eines Abfallsammelfahrzeugs in Anlage bringbar ist und in der zweite Öffnungen 7 zum Fixieren des Anbauteils vorgesehen sind. Das Fixieren erfolgt in der Regel schraubtechnisch, so dass für die Montage eines bestimmten Anbauteils typische Lochbilder für die Schraubverbindung an dem Aufbau 1 vorgesehen sind. In den erfindungsgemäßen Profilen 2 sind nun Lochbilder für sämtliche möglichen Anbauteile vorgesehen. Dabei können mehrere Löcher ein Lochbild für einen Anbindungspunkt 8 ergeben. Die Anbindungspunkte 8 für ein Anbauteil können auch unterschiedliche gestaltet sein. Wie oben bereits erläutert sind im Sinne der Gleichteilfertigung auch Lochbilder für Anbindungspunkte 8 für ein rechtes und ein linkes Profil 2 vorgesehen.

Die jeweils vorgesehenen Adapterstücke 3 weisen dazu passende Löcher auf, die die Schrauben zum Anbringen des Anbauteils aufnehmen.

Die Aufbauten 1 werden üblicherweise auf einem Chassis montiert, die von unterschiedlichen Herstellern stammen und die unterschiedlich hoch sind. Damit einher geht, dass die Aufbauten 2 bauartbedingt in unterschiedlichen Höhen montiert werden müssen. Gleichzeitig sind bestimmte Maße, wie etwa die Höhe der Kippkante normiert. Um die Diskrepanz der verschiedenen Höhen zu kompensieren und auch um produktionsbedingte Toleranzen ausgleichen zu können, sind die Lochbilder eines Anbindungspunktes 8 in verschiedenen Höhen in Einbaulage des Profils vorgesehen. Die Adapterstücke 3 weisen entweder ebenfalls entsprechend in der Höhe variierende Löcher auf oder es sind auch die ersten Öffnungen 5 in mehreren Höhenlagen vorgesehen.

Das Profil 2 weist außerdem eine dritte Wand 9 mit dritten Öffnungen 10,11 auf, die unterschiedlichen Zwecken dienen. Dies sind zum einen Montageöffnungen 10, die dazu dienen, die Adapterstücke 3 an ihre vorgesehenen Positionen zu bringen, diese zum Beispiel durch die Montageöffnungen 10 hindurch zu greifen und im Inneren des Profils 2 zu führen oder um Werkzeuge zum Montieren der Adapterstücke 3 in das Innere des Profils 2 einzuführen.

Zum anderen sind Adapterhalteöffnungen 11 vorgesehen, die dazu dienen, die Adapterstücke 3 in das Profil 2 einzubringen und an ihrer vorgesehenen Position zu halten.

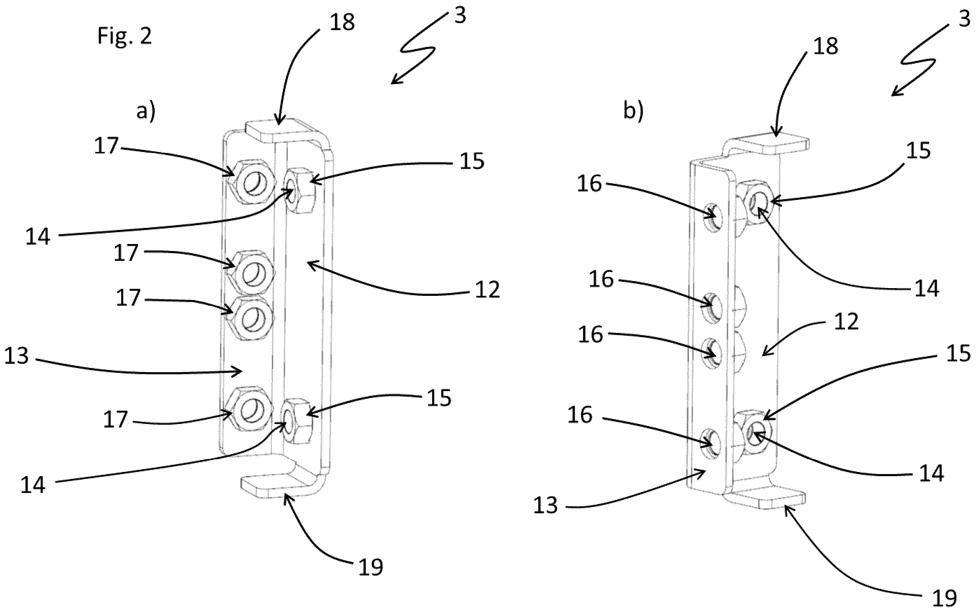

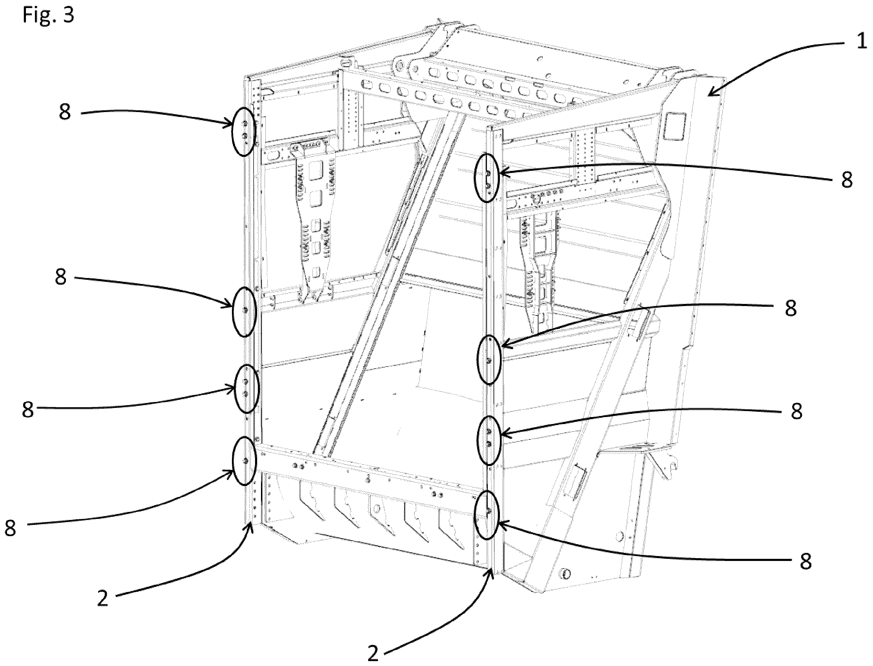

In Figur 2a und 2b ist ein erstes Ausführungsbeispiel für ein Adapterstück 3 dargestellt. Figur 3 zeigt die dafür vorgesehenen Montagepunkte an den an einem Aufbau 1 angeordneten Profilen 3, die die Anbindungspunkte 8 für das Anbauteil bilden. Das Adapterstück 3 weist einen ersten Flächenabschnitt 12 auf, der mit der ersten Wand 4 in Anlage bringbar ist, und weist einen zweiten Flächenabschnitt 13 auf, der mit der zweiten Wand 6 in Anlage bringbar ist. In dem ersten Flächenabschnitt 12 sind Löcher 14 vorgesehen, die in Einbaulage mit einer ersten Öffnung 5 der ersten Wand 4 fluchten können. Die Löcher 14 sind mit angeschweißten Muttern 15 versehen. Für die Montage wird eine Schraube von der Aufbauseite her in die betreffende erste Öffnung 5 eingeführt und durch das Loch 14 mit der Mutter 15 verschraubt. Dadurch wird das Adapterstück 3 an dem Profil 2 festgelegt. Je nach konstruktiven Randbedingungen, kann dafür eine oder auch mehrere Schrauben verwendet werden.

Wird dasselbe Adapterstück 3 in einem rechten und einem linken Profil 2 verwendet, wird es einmal um 180 Grad gedreht. Das heißt, dass die Löcher 14 jeweils für die rechte und für die linke Seite passend vorgesehen werden muss. Idealerweise werden die Löcher 14 und gegebenenfalls ersten Öffnungen 5 unter Nutzung von Symmetrien angelegt, so dass die Löcher 14 in mehreren Situationen genutzt werden können.

Der zweite Flächenabschnitt 13 weist zumindest ein Loch 16 auf, das in Einbaulage mit einer zweiten Öffnung 7 der zweiten Wand 6 fluchtend angeordnet ist, so dass ein Anbauteil schraubtechnisch fixierbar ist. Auch dieser Löcher 16 sind mit angeschweißten Muttern 17 versehen. Die Schrauben werden von dem Anbauteil her durch die zweiten Öffnungen 7 eingeführt, durchgreifen die Löcher 16 und werden in die Muttern 17 eingeschraubt. Die Löcher 16 weisen dabei ein Lochbild auf, das zu einer Befestigungsvorrichtung eines Anbauteils passt. Wir vorstehend bereits beschrieben unterscheiden sich die Anbauteile darin, an welchen Positionen sie mit welcher Anzahl von Schrauben befestigt werden. Daran sind die Lochbilder des zweiten Flächenabschnitts 13 angepasst und ebenfalls zur Verwendung in einem rechten und einem linken Profil 2 vorgesehen.

An dem in Einbaulage oberen Ende des Adapterstücks 3 ist eine obere Lasche 18 vorgesehen, an dem unteren Ende eine untere Lasche 19. Diese Laschen 18, 19 dienen dazu, das Adapterstück 3 durch das Profil 2 zu schieben.

Bei der Montage wird zunächst je ein Profil 2 rechts- und linksseitig am hinteren Ende des Aufbaus 1 angeordnet und dort schweißtechnisch festgelegt. Danach wird ein Adapterstück 3 an dem unteren, offenen Ende in das Profil 2 eingeführt und in Längsrichtung das Profils 2 durch dessen Innenraum geschoben. Durch die dritten Öffnungen 10,11 können die Laschen 18, 19 des Adapterstücks gegriffen werden und so das Adapterstück 3 in dem Profil 2 geschoben werden, bis es an seiner vorgesehenen Position angelangt ist. Bereits dabei ist der erste Flächenabschnitt 12 mit der ersten Wand 4 und der zweite Flächenabschnitt 13 mit der zweiten Wand 6 in Anlage.

In einem weiteren Schritt wird zumindest eine Schraube vom Aufbau 1 her durch eine erste Öffnung 5 und ein Loch 14 geführt und gegen eine Mutter 15 verschraubt, so dass das Adapterstück 3 an dem Profil 2 festgelegt ist.

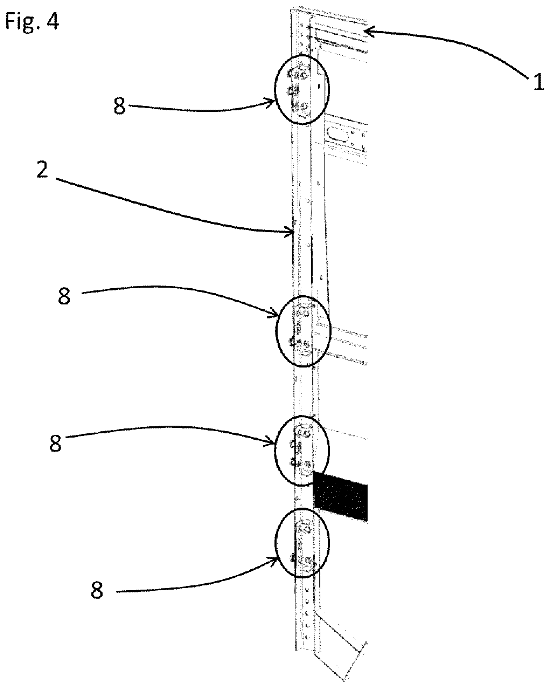

Diese Verfahrensschritte werden wiederholt, bis alle Adapterstücke 3 in dem Profil 2 angeordnet sind und Anbindungspunkte 8 bilden (Figuren 3 und 4).

Danach wird ein Anbauteil montiert, indem Schrauben durch entsprechende Befestigungsvorrichtungen der Anbauteile geführt werden, die zweiten Öffnungen 7 des Profils 2 und die jeweiligen Löcher 16 durchgreifen und gegen die Muttern 17 verschraubt werden.

Am Ende werden die Profile 2 mit Abdeckplatten verschlossen, um ihr Inneres vor Verschmutzung zu schützen. Auch dafür können Öffnungen in den Profilen 2 vorgesehen sein, um beispielsweise eine Abdeckplatte festzuklipsen.

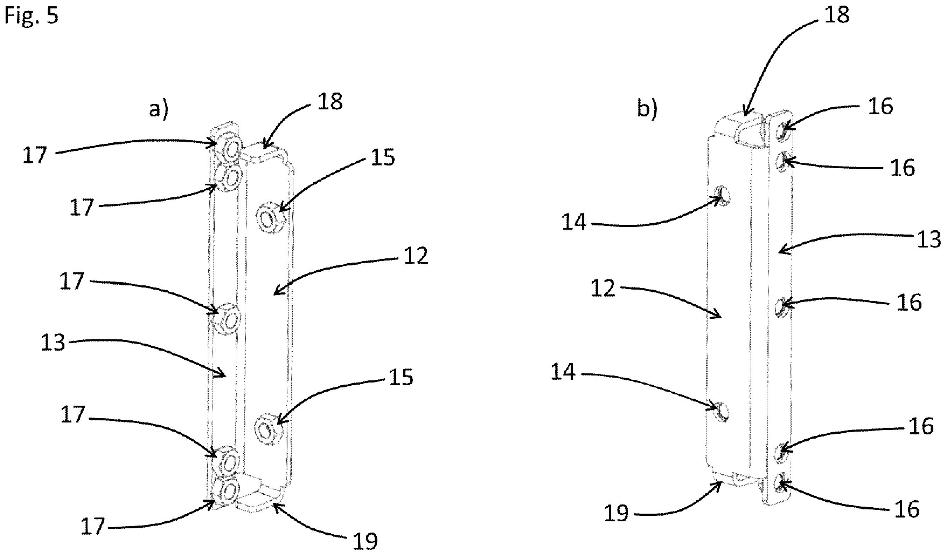

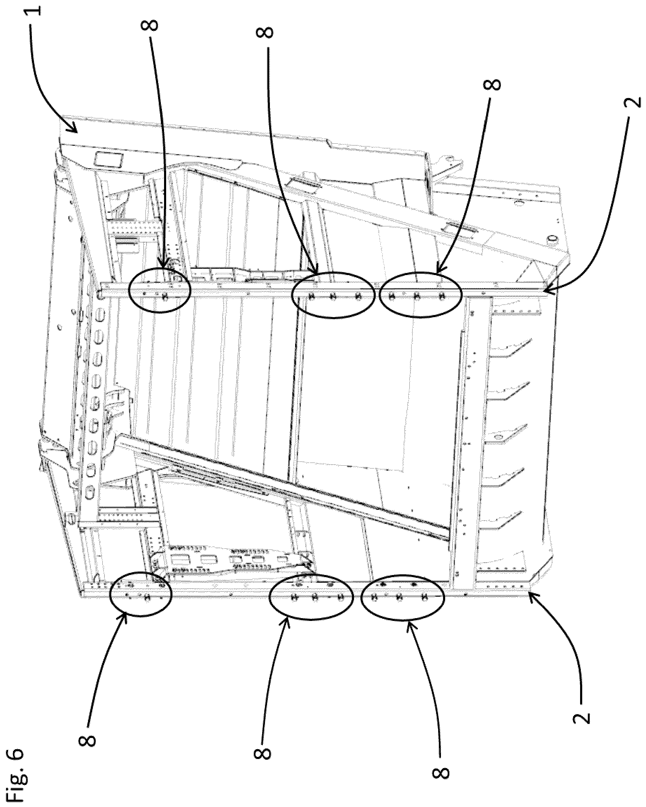

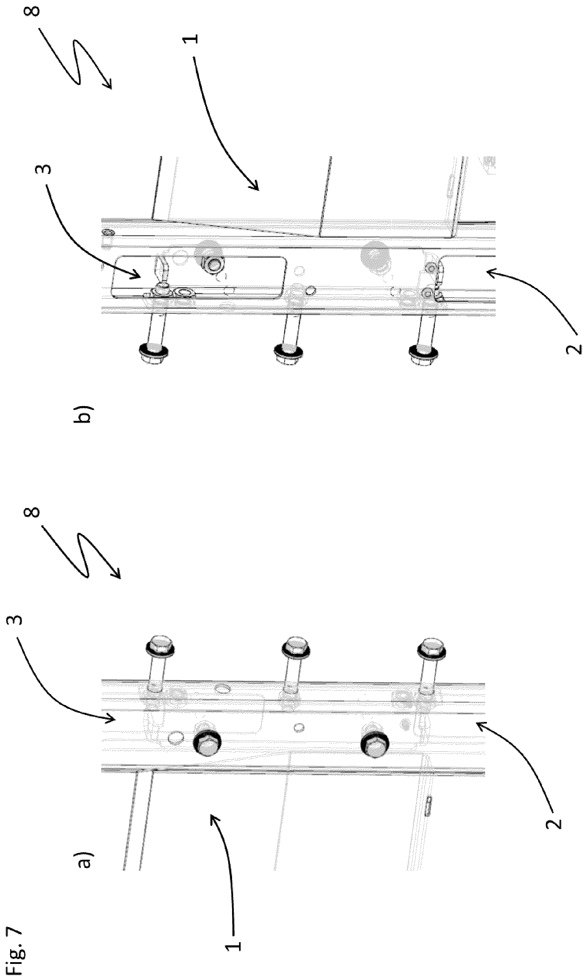

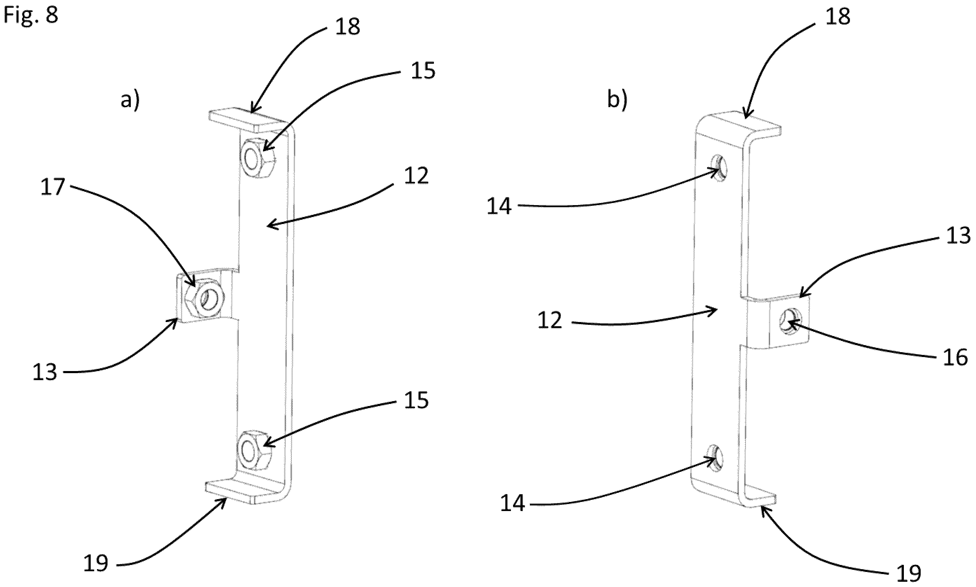

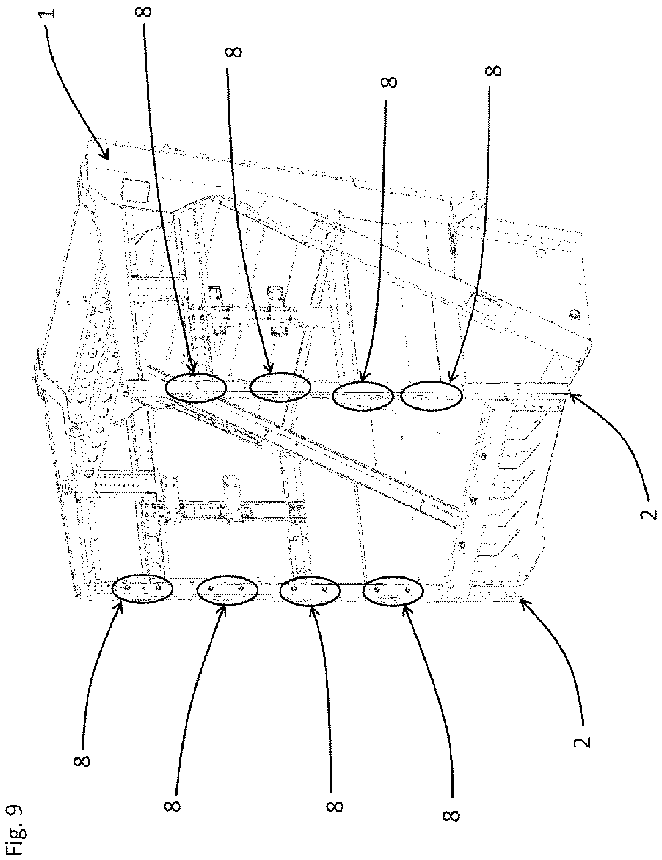

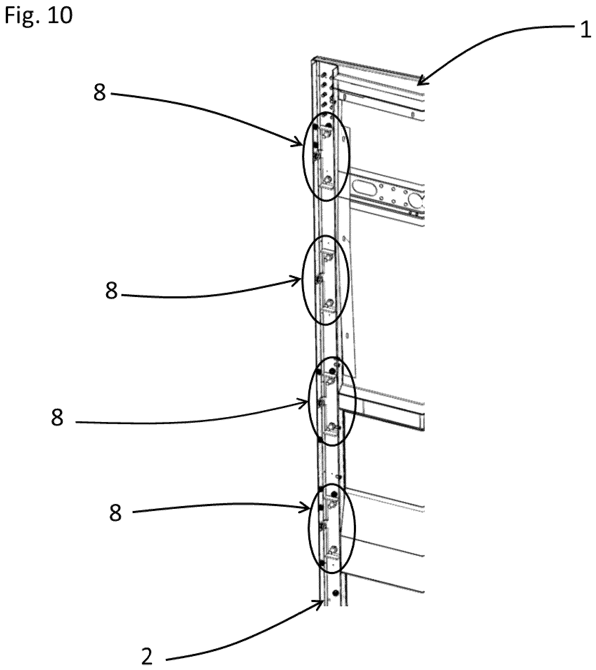

Die Figuren 2 bis 4 zeigen ein erstes Ausführungsbeispiel für die Erfindung, die Figuren 5 bis 10 zeigen in analoger Weise weitere Ausführungsbeispiele zusammen mit ihrem jeweiligen Anbindungsschema. Selbe Bezugszeichen bezeichnen dabei dieselben Merkmale und auch die vorstehenden Erläuterungen zu dem ersten Ausführungsbeispiel gelten in analoger Weise für die weiteren Ausführungsbeispiele, daher wird zur Vermeidung von Wiederholungen auf diese verwiesen. Die Beispiele demonstrieren die Variabilität der Erfindung und die Flexibilität, die damit einher geht.

Das erfindungsgemäße Fixierungssystem zeichnet sich nicht nur dadurch aus, dass die Montage unterschiedlicher Anbauteile an identisch ausgestalteten Aufbauten auf einfache Weise ermöglicht wird. Gleichzeitig wird auch der Aufwand für die Lagerung und Logistik reduziert. Außerdem wird eine Umrüstbarkeit eines Abfallsammelfahrzeugs ermöglicht, indem lediglich die Adapterstücke 3 ausgetauscht werden müssen.

### Bezugszeichen

- 1: Aufbau
- 2: Profil
- 3: Adapterstück
- 4: erste Wand von 2
- 5: erste Öffnungen
- 6: zweite Wand von 2
- 7: zweite Öffnungen
- 8: Anbindungspunkt
- 9: dritte Wand von 2
- 10: dritte Öffnung, Montageöffnung
- 11: dritte Öffnung, Adapterhalteöffnung
- 12: erster Flächenabschnitt von 3
- 13: zweiter Flächenabschnitt von 3
- 14: Loch
- 15: Mutter
- 16: Loch
- 17: Mutter
- 18: obere Lasche
- 19: untere Lasche

## Patentansprüche

1. Fixierungssystem für ein Abfallsammelfahrzeug umfassend zumindest ein Profil (2) und zumindest ein Adapterstück (3), das an oder in dem Profil (2) anordnenbar ist, wobei Profil (2) und Adapterstück (3) dazu eingerichtet sind, um an einem Aufbau (1) eines Abfallsammelfahrzeugs angeordnet zu werden und die Anbringung eines Anbauteils an dem Aufbau (1) zu ermöglichen,
wobei das Profil (2) so ausgebildet ist, dass unterschiedliche auf konkrete Anbauteile abgestimmte Adapterstücke (3) an unterschiedlichen Positionen anordnenbar sind, so dass die Adapterstücke (3) Anbindungspunkte (8) für das Anbauteil bilden.

2. Fixierungssystem nach Anspruch 1 **dadurch gekennzeichnet, dass** das Profil (2) eine erste Wand (4) aufweist, die mit dem Aufbau (1) eines Abfallsammelfahrzeugs in Anlage bringbar ist und in der erste Öffnungen (5) zum Fixieren des Adapterstücks (3) vorgesehen sind.

3. Fixierungssystem nach Anspruch 2 **dadurch gekennzeichnet, dass** unterschiedliche Arten von ersten Öffnungen (5) vorgesehen sind, um auf unterschiedliche Anbauteile angepasste Adapterstücke (3) zu fixieren.

4. Fixierungssystem nach zumindest einem der vorstehenden Ansprüche **dadurch gekennzeichnet, dass** das Profil (2) eine zweite Wand (6) aufweist, die mit einem Anbauteil eines Abfallsammelfahrzeugs in Anlage bringbar ist und in der zweite Öffnungen (7) zum Fixieren des Anbauteils vorgesehen sind.

5. Fixierungssystem nach Anspruch 4 **dadurch gekennzeichnet, dass** unterschiedliche Arten von zweiten Öffnungen (7) vorgesehen sind, um unterschiedliche Anbauteile zu fixieren.

6. Fixierungssystem nach Anspruch 4 oder 5 **dadurch gekennzeichnet, dass** zweite Öffnungen (7) zum Fixieren eines konkreten Anbauteils in verschiedenen Höhen vorgesehen sind.

7. Fixierungssystem nach zumindest einem der vorstehenden Ansprüche **dadurch gekennzeichnet, dass** das Profil (2) eine dritte Wand (9) aufweist, in der dritte Öffnungen (10,11) zum Einbringen von Werkzeugen oder für Montagezwecke vorgesehen sind und die vorzugsweise von dem Aufbau (1) eines Abfallsammelfahrzeugs weg weist.

8. Fixierungssystem nach zumindest einem der vorstehenden Ansprüche **dadurch gekennzeichnet, dass** das Adapterstück (3) einen ersten Flächenabschnitt (12) aufweist, der mit der ersten Wand (4) in Anlage bringbar ist, und einen zweiten Flächenabschnitt (13) aufweist, der mit der zweiten Wand (6) in Anlage bringbar ist.

9. Fixierungssystem nach Anspruch 8 **dadurch gekennzeichnet, dass** der erste Flächenabschnitt (12) zumindest ein Loch (14) aufweist, das in Einbaulage mit einer ersten Öffnung (5) der ersten Wand (4) fluchtend angeordnet ist, so dass das Adapterstück (3) schraubtechnisch fixierbar ist.

10. Fixierungssystem nach Anspruch 8 oder 9 **dadurch gekennzeichnet, dass** der zweite Flächenabschnitt (13) zumindest ein Loch (16) aufweist, das in Einbaulage mit einer zweiten Öffnung (7) der zweiten Wand (6) fluchtend angeordnet ist, so dass ein Anbauteil schraubtechnisch fixierbar ist.

11. Fixierungssystem nach Anspruch 10 **dadurch gekennzeichnet, dass** der zweite Flächenabschnitt (13) ein zu der Befestigungsvorrichtung eines Anbauteils passendes Lochbild aufweist.

12. Fixierungssystem nach zumindest einem der Ansprüche 9 bis 11 **dadurch gekennzeichnet, dass** die Löcher (14,16) des Adapterstücks (3) für die schraubtechnische Fixierung mit Muttern (15,17) versehen sind.

13. Fixierungssystem nach zumindest einem der Ansprüche 9 bis 12 **dadurch gekennzeichnet, dass** die Löcher (14,16) in dem ersten Flächenabschnitt (12) und dem zweiten Flächenabschnitt (13) des Adapterstücks (3) so ausgebildet sind, dass das Adapterstück (3) an unterschiedlichen Positionen in oder an dem Profil (2) anbringbar ist, insbesondere dass das Adapterstück (3) in oder an einem Profil (2) an einer linken Seite des Aufbaus (1) und in oder an einem Profil (2) an einer rechten Seite des Aufbaus (1) anbringbar ist.

14. Abfallsammelfahrzeug mit einem Fixierungssystem nach zumindest einem der vorstehenden Ansprüche.

15. Abfallsammelfahrzeug nach Anspruch 18 **dadurch gekennzeichnet, dass** am heckseitigen Aufbau (1) rechtsseitig und linksseitig je ein Profil (2) angeordnet, vorzugsweise angeschweißt, ist.
